# EUROPEAN PATENT APPLICATION

(11) **EP 4 790 766 A1**
(43) Date of publication of application: **12.08.2026**
(21) Application number: 24837278.1
(22) Date of filing: 20.11.2024
(51) Int. Cl.: H01M 4/58, H01M 4/36, H01M 10/054

(54) **SODIUM VANADIUM FLUOROPHOSPHATE POSITIVE ELECTRODE MATERIAL AND PREPARATION METHOD THEREFOR, POSITIVE ELECTRODE SHEET AND SODIUM-ION BATTERY**

(30) Priority: 18.11.2024 CN 202411653245
(71) Applicant: Hubei Wanrun New Energy Technology Co., Ltd., Shiyan, Hubei 442500 (CN)
(72) Inventor: PENG, Tangping, Shiyan, Hubei 442500 (CN); LV, Fei, Shiyan, Hubei 442500 (CN); ZHANG, Dun, Shiyan, Hubei 442500 (CN)
(74) Representative: Studio Torta S.p.A.
(86) International application number: PCT/CN2024/133317
(87) International publication number: WO 2026/102796

(57) **Abstract**

Provided are a sodium vanadium fluorophosphate cathode material, a cathode plate and a sodium-ion battery, and the present application belongs to the technical field of sodium-ion batteries. The sodium vanadium fluorophosphate cathode material includes sodium vanadium fluorophosphate particles and nitrogen-doped carbon coating layers on surfaces of the sodium vanadium fluorophosphate particles, a ratio of Ig to Id of the nitrogen-doped carbon coating layers in a Raman spectrum is 1-1.9, a porosity of the sodium vanadium fluorophosphate cathode material is 12%-33%, and a powder resistivity of the sodium vanadium fluorophosphate cathode material is 27,000 Ω·cm-73,000 Ω·cm. The present application is conducive to improving the electrochemical performance of the sodium vanadium fluorophosphate cathode material, especially cycle performance and rate capability.

## Description

### Technical Field

The present disclosure relates to the technical field of sodium-ion batteries, and specifically relates to a sodium vanadium fluorophosphate cathode material and a preparation method therefor, a cathode plate and a sodium-ion battery.

### Background

With rapid development of energy storage technologies, lithium-ion batteries have become the first choice for energy storage devices in portable electronic devices, new energy vehicles and other products. However, due to limited lithium resources and constantly rising prices in the global world, researchers have begun to seek alternative solutions to maintain sustainable energy sources. Sodium-ion batteries have been widely concerned because of similar operating principles to the lithium-ion batteries, abundant sodium resources and a relatively low cost.

Among many cathode materials for the sodium-ion batteries, polyanionic compounds are considered to have good cycle stability because of stable structures, and particularly, two materials, NaVPO₄F and Na₃V₂(PO₄)₂F₃ (NVPF) have been frequently reported. Although NaVPO₄F shows a relatively high theoretical specific capacity, the specific discharge capacity and the cycle stability are not ideal in practical applications. Relatively speaking, due to a strong induction effect generated by highly electronegative F⁻ of NVPF, a vanadium-oxygen covalent bond is weakened, thereby increasing the redox potential, achieving an average operating voltage of about 3.9 V and having a higher theoretical specific capacity of 128 mA·h·g⁻¹. However, NVPF has extremely low electron conductivity, which limits a reversible capacity at a low rate and thus affects the play of electrochemical performance and practical application prospects in the sodium-ion batteries.

In order to overcome these challenges, a variety of strategies have been adopted by researchers to improve the performance of NVPF, including ion doping, carbon coating, construction of special morphology and other methods, to enhance the conductivity of materials, improve reaction kinetics and improve the cycle stability. However, sodium vanadium fluorophosphate composite materials prepared by the above methods have relatively poor uniformity and stability, and their conductivities still need to be improved.

Based on this, cathode materials with better conductivity and rate capability still need to be further researched and developed to meet increasing market demands.

### SUMMARY

In view of the technical problems in the background, the present application provides a sodium vanadium fluorophosphate cathode material and a preparation method therefor, a cathode plate and a sodium-ion battery, aiming to solve the technical problems that the conductivity and rate capability of cathode materials for sodium-ion batteries in the prior art are insufficient.

In a first aspect, an embodiment of the present application provides a sodium vanadium fluorophosphate cathode material. The sodium vanadium fluorophosphate cathode material includes sodium vanadium fluorophosphate particles and nitrogen-doped carbon coating layers on surfaces of the sodium vanadium fluorophosphate particles, a ratio of Ig to Id of the nitrogen-doped carbon coating layers in a Raman spectrum is 1-1.9, a porosity of the sodium vanadium fluorophosphate cathode material is 12%-33%, and a powder resistivity of the sodium vanadium fluorophosphate cathode material is 27,000 Ω·cm -73,000 Ω·cm.

In technical solutions of embodiments of the present application, the sodium vanadium fluorophosphate cathode material contains the nitrogen-doped carbon coating layers, the ratio of Ig to Id of the nitrogen-doped carbon coating layers in the Raman spectrum is controlled within the above range, and the porosity of the sodium vanadium fluorophosphate cathode material is controlled within the above range, such that the nitrogen-doped carbon coating layers show relatively uniform porous network structures, convenience is provided for effectively controlling the volume change and agglomeration of the sodium vanadium fluorophosphate particles in a charge-discharge process, and thus the structural stability of the sodium vanadium fluorophosphate cathode material is enhanced. Meanwhile, the nitrogen-doped carbon coating layers of the sodium vanadium fluorophosphate cathode material of the present application having the porous amorphous carbon coating structures and the introduction of nitrogen atoms are conducive to controlling the powder resistivity of the sodium vanadium fluorophosphate cathode material within the above range and conducive to enhancing the conductivity and ion diffusivity of the sodium vanadium fluorophosphate cathode material, such that the sodium vanadium fluorophosphate cathode material has excellent electrochemical performance in terms of cycle performance and rate capability.

In some embodiments, a mass of carbon in the nitrogen-doped carbon coating layers accounts for 1%-4% of a mass of the sodium vanadium fluorophosphate cathode material; and a mass of nitrogen in the nitrogen-doped carbon coating layers accounts for 0.2%-1.5% of the mass of the sodium vanadium fluorophosphate cathode material.

In the embodiment, by controlling the mass fraction of carbon and the mass fraction of nitrogen in the nitrogen-doped carbon coating layers within the above range, respectively, convenience is provided for forming the porous network structures of the nitrogen-doped carbon coating layers, and the structural stability of the sodium vanadium fluorophosphate cathode material is improved more effectively. Moreover, by combining with doping of an appropriate amount of N, the conductivity and ion diffusivity of the sodium vanadium fluorophosphate particles are enhanced, thereby further improving the electrochemical performance of the sodium vanadium fluorophosphate cathode material.

In some embodiments, a D50 particle size of the sodium vanadium fluorophosphate cathode material is 0.8 µm-14 µm, and a D100 particle size of the sodium vanadium fluorophosphate cathode material is less than 65 µm; a specific surface area of the sodium vanadium fluorophosphate cathode material is 12 m²/g-62 m²/g; an average pore size of the nitrogen-doped carbon coating layers of the sodium vanadium fluorophosphate cathode material is 1.9 nm-6 nm; and the powder resistivity of the sodium vanadium fluorophosphate cathode material is 27,500 Ω·cm-62,000 Ω·cm.

In the embodiment, by controlling the particle size, specific surface area, powder resistivity and average pore size of the nitrogen-doped carbon coating layers of the sodium vanadium fluorophosphate cathode material, convenience is provided for further improving the electrochemical performance of the sodium vanadium fluorophosphate cathode material.

In a second aspect, an embodiment of the present application provides a preparation method for a sodium vanadium fluorophosphate cathode material. The preparation method includes: mixing sodium vanadium fluorophosphate, an organic carbon source, an organic nitrogen source and a crosslinking agent, and performing gel treatment to obtain a gel slurry; and subjecting the gel slurry to drying treatment and carbonization treatment to obtain a sodium vanadium fluorophosphate cathode material, wherein the drying treatment includes spray freeze drying.

In technical solutions of embodiments of the present application, the sodium vanadium fluorophosphate cathode material is successfully prepared by the preparation method using the organic carbon source and the organic nitrogen source as raw materials, in combination with a spray freeze drying method, a sol-gel method and the carbonization treatment. By means of the preparation method, not only can the sodium vanadium fluorophosphate cathode material form nitrogen-doped carbon coating layers with uniform porous network structures, thereby controlling the porosity of the sodium vanadium fluorophosphate cathode material within the range of 12%-33% and the ratio of Ig to Id of the nitrogen-doped carbon coating layers in the Raman spectrum within the range of 1-1.9, but also since the gel slurry obtained after the gel treatment is acidic and fluoride ions are easily hydrolyzed into HF under acidic conditions, the gel dried by the spray freeze drying method can also avoid the loss of F caused by volatilization of HF during heating and drying, thereby avoiding impure phases, such as sodium vanadium phosphate, generated by the loss of F, and thus avoiding increased powder resistivity and decreased conductivity of the sodium vanadium fluorophosphate cathode material caused by the presence of the impure phases. Therefore, the sodium vanadium fluorophosphate cathode material prepared by the above method can maintain excellent performance in a cyclic charge-discharge process, and can also show excellent electrochemical performance especially under high rate charge-discharge conditions.

In some embodiments, the organic carbon source includes one or more of carboxymethyl cellulose, starch, sucrose, or cyclodextrin; the organic nitrogen source includes one or more of chitosan or gelatin; a mass ratio of the organic carbon source to the organic nitrogen source is (1:1)-(3:1); and a mass sum of the organic carbon source and the organic nitrogen source is 6%-18% of a mass of the sodium vanadium fluorophosphate.

In the embodiment, by using specific types of the organic carbon source and the organic nitrogen source, the structure and morphology of the prepared sodium vanadium fluorophosphate cathode material can be better controlled, and the uniformity and stability of the fluorophosphate cathode material are further improved, thereby improving the conductivity and electron transport rate of the fluorophosphate cathode material more significantly. Further, by controlling use amounts of the organic carbon source and the organic nitrogen source, the prepared sodium vanadium fluorophosphate cathode material can have an appropriate carbon content and nitrogen content, convenience is provided for forming the porous network structures of the nitrogen-doped carbon coating layers, and the structural stability of the sodium vanadium fluorophosphate cathode material is improved more effectively. Moreover, by combining with doping of an appropriate amount of N, the conductivity and ion diffusivity of the sodium vanadium fluorophosphate particles are enhanced, thereby further improving the electrochemical performance of the sodium vanadium fluorophosphate cathode material.

In some embodiments, the crosslinking agent includes one or more of citric acid, tannic acid, digallic acid, or phytic acid; and a mass of the crosslinking agent is 15%-25% of the mass of the sodium vanadium fluorophosphate.

In the embodiment, the crosslinking agent plays the roles of crosslinking and complexing ions during the gel treatment. By controlling an addition amount of the crosslinking agent within an appropriate range, convenience is provided for controlling the content of carbon in the prepared sodium vanadium fluorophosphate cathode material, avoiding that the content of carbon in a finally obtained product is too high or too low.

In some embodiments, a temperature of the gel treatment is 30°C-50°C, and a time of the gel treatment is 2 h-6 h.

In the embodiment, by controlling process conditions, such as the temperature and time of the gel treatment, the organic carbon source, the organic nitrogen source and the crosslinking agent can undergo a gelation reaction more efficiently with the sodium vanadium fluorophosphate, thereby improving the performance of the finally obtained sodium vanadium fluorophosphate cathode material.

In some embodiments, an atomization pressure of the spray freeze drying is 0.1 MPa-0.4 MPa; and the carbonization treatment includes stage carbonization treatment, the stage carbonization treatment sequentially includes first-stage carbonization treatment, second-stage carbonization treatment and third-stage carbonization treatment, a temperature of the first-stage carbonization treatment is 100 °C -120 °C, a holding time of the first-stage carbonization treatment is 2 h -4 h, a temperature of the second-stage carbonization treatment is 300 °C -350 °C, a holding time of the second-stage carbonization treatment is 1 h -3 h, a temperature of the third-stage carbonization treatment is 600 °C -750 °C, and a holding time of the third-stage carbonization treatment is 5 h -8 h.

In the embodiment, by controlling the atomization pressure of the spray freeze drying within the above range, the drying efficiency is improved, the loss of F during the drying is further reduced, and impure phases, such as sodium vanadium phosphate, generated by the loss of F are reduced, thereby improving the performance of the obtained sodium vanadium fluorophosphate cathode material. Through the stage carbonization treatment, convenience is provided for forming the nitrogen-doped carbon coating layers with more uniform structures.

In a third aspect, an embodiment of the present application provides a cathode plate. The cathode plate includes a current collector and an active material layer arranged on a surface of the current collector, and the active material layer includes the sodium vanadium fluorophosphate cathode material according to any one of the foregoing embodiments or a sodium vanadium fluorophosphate cathode material prepared by the preparation method for a sodium vanadium fluorophosphate cathode material according to any one of the foregoing embodiments.

In the embodiment, since the sodium vanadium fluorophosphate cathode material contains the nitrogen-doped carbon coating layers, by controlling the ratio of Ig to Id of the nitrogen-doped carbon coating layers in the Raman spectrum within the range of 1-1.9, controlling the porosity of the sodium vanadium fluorophosphate cathode material within the range of 12%-33% and having the porous amorphous carbon coating structures and the introduction of nitrogen atoms, convenience is provided for controlling the powder resistivity of the sodium vanadium fluorophosphate cathode material within the range of 27,000 Ω·cm -73,000 Ω·cm, such that the sodium vanadium fluorophosphate cathode material has relatively good structural stability and has excellent electrochemical performance in terms of cycle performance and rate capability. Therefore, the cathode plate of the present application also has good stability and excellent electrochemical performance such as cycle performance and rate capability.

In a fourth aspect, an embodiment of the present application provides a sodium-ion battery. The sodium-ion battery includes the cathode plate described above.

In the embodiment, since the sodium-ion battery includes the cathode plate described above, the electrochemical performance, such as cycle performance and rate capability, is improved significantly, which is especially excellent under high rate charge-discharge conditions.

The description above is only an overview of the technical solutions of the present application. In order to make technical means of the present application better understood, implementation can be carried out in accordance with contents of the specification. Moreover, in order to make the above and other purposes, features and advantages of the present application more clearly understood, specific embodiments of the present application are particularly listed below.

### Brief Description of the Drawings

In order to illustrate the technical solutions of the present application more clearly, drawings required to be used in the present application are briefly introduced below. Obviously, the drawings described below are merely some embodiments of the present application, and for those of ordinary skill in the art, other drawings can also be obtained without exerting creative efforts according to these drawings.
Fig. 1 is a process flow diagram of a preparation method for a sodium vanadium fluorophosphate cathode material of the present application;
Fig. 2 is a scanning electron microscope image of a sodium vanadium fluorophosphate cathode material in Example 1 of the present application;
Fig. 3 is a scanning electron microscope image of a sodium vanadium fluorophosphate cathode material in Comparative Example 1 of the present application; and
Fig. 4 is a scanning electron microscope image of a sodium vanadium fluorophosphate cathode material in Comparative Example 2 of the present application.

### Detailed Description of the Embodiments

The embodiments of the technical solutions of the present application are described in detail below in combination with the drawings. The following embodiments are merely used for illustrating the technical solutions of the present application more clearly, which can only be used as examples and are not intended to limit the scope of protection of the present application.

Unless otherwise defined, all technical terms and scientific terms used herein have same meanings as those generally understood by persons skilled in the technical field to which the present application belongs. The terms used herein are used only for the purpose of describing specific embodiments and are not intended to limit the present application. The terms "include" and "have" and any variations thereof in illustration of the specification and claims of the present application as well as the drawings are intended to cover non-exclusive inclusions.

In description of the embodiments of the present application, the technical terms "first" and "second" are used merely for distinguishing different objects and shall not be construed as indicating or implying relative importance or implying a quantity, a specific order or a primary or secondary relationship of indicated technical features,. In description of the embodiments of the present application, "a plurality of" means two or more, unless clearly and specifically defined otherwise.

Reference to the "embodiments" herein means that particular features, structures or characteristics described in conjunction with the embodiments may be included in at least one embodiment of the present application. The phrase referred at various positions of the specification neither necessarily indicates same embodiments, nor indicates separate or alternative embodiments that are mutually exclusive with other embodiments. As understood explicitly and implicitly by those skilled in the art, the embodiments described herein may be combined with other embodiments.

In description of the embodiments of the present application, the term "and/or" merely shows an association relationship describing associated objects, indicating that three kinds of relationships may be expressed. For example, A and/or B may be expressed as in three situations, including separate presence of A, simultaneous presence of A and B, and separate presence of B. In addition, the character "/" herein generally means that former and latter associated objects have an "or" relationship.

In description of the embodiments of the present application, the term "a plurality of" means two or more (including two). Similarly, "multiple groups" means two groups or more (including two groups), and "multiple pieces" means two pieces or more (including two pieces).

As analyzed in the background of the present application, the prior art has the technical problems that the conductivity and rate capability of cathode materials for sodium-ion batteries are insufficient. In order to solve the problems, the present application provides a sodium vanadium fluorophosphate cathode material and a preparation method therefor, a cathode plate and a sodium-ion battery.

In a first aspect, an embodiment of the present application provides a sodium vanadium fluorophosphate cathode material. The sodium vanadium fluorophosphate cathode material includes sodium vanadium fluorophosphate particles and nitrogen-doped carbon coating layers on surfaces of the sodium vanadium fluorophosphate particles, a ratio of Ig to Id of the nitrogen-doped carbon coating layers in a Raman spectrum is 1-1.9, a porosity of the sodium vanadium fluorophosphate cathode material is 12%-33%, and a powder resistivity of the sodium vanadium fluorophosphate cathode material is 27,000 Ω·cm -73,000 Ω·cm.

In technical solutions of embodiments of the present application, the sodium vanadium fluorophosphate cathode material contains the nitrogen-doped carbon coating layers, the ratio of Ig to Id of the nitrogen-doped carbon coating layers in the Raman spectrum is controlled within the above range, and the porosity of the sodium vanadium fluorophosphate cathode material is controlled within the above range, such that the nitrogen-doped carbon coating layers show relatively uniform porous network structures, convenience is provided for effectively controlling the volume change and agglomeration of the sodium vanadium fluorophosphate particles in a charge-discharge process, and thus the structural stability of the sodium vanadium fluorophosphate cathode material is enhanced. Meanwhile, the nitrogen-doped carbon coating layers of the sodium vanadium fluorophosphate cathode material of the present application having the porous amorphous carbon coating structures and the introduction of nitrogen atoms are conducive to controlling the powder resistivity of the sodium vanadium fluorophosphate cathode material within the above range and conducive to enhancing the conductivity and ion diffusivity of the sodium vanadium fluorophosphate cathode material, such that the sodium vanadium fluorophosphate cathode material has excellent electrochemical performance in terms of cycle performance and rate capability.

Wherein, g peaks in the Raman spectrum usually refer to peaks located near 1,580 cm⁻¹, for example, peaks located within the range of 1,500 cm⁻¹-1,700 cm⁻¹, which are used for characterizing the degree of graphitization of carbon materials, that is, for characterizing the degree of graphitization of the nitrogen-doped carbon coating layers. Meanwhile, d peaks usually refer to peaks located near 1,350 cm⁻¹ in the Raman spectrum, for example, peaks located within the range of 1,200 cm⁻¹-1,400 cm⁻¹, which are used for characterizing defects of carbon materials, that is, for characterizing defects of the nitrogen-doped carbon coating layers. The ratio of Ig to Id represents an intensity ratio of the g peaks to the d peaks in the Raman spectrum (a value of Ig/Id), which is used for assessing the integrity and quality of graphite structures in the nitrogen-doped carbon coating layers. In the present application, the conductivity and rate capability of the cathode material are improved by controlling the ratio of Ig to Id of the nitrogen-doped carbon coating layers on the surface of the sodium vanadium fluorophosphate cathode material in the Raman spectrum, in combination with the porosity and powder resistivity of the sodium vanadium fluorophosphate cathode material. Specifically, the ratio of Ig to Id of the nitrogen-doped carbon coating layers in the Raman spectrum is 1, 1.1, 1.2, 1.3, 1.4, 1.5, 1.6, 1.7, 1.8, etc., but is not limited thereto. Preferably, the ratio of Ig to Id of the nitrogen-doped carbon coating layers in the Raman spectrum is 1-1.7, more preferably 1-1.4.

Specifically, the porosity of the sodium vanadium fluorophosphate cathode material is 12%, 14%, 16%, 18%, 20%, 22%, 24%, 26%, 28%, 30%, 32%, etc., and may also be other values within the above range. Preferably, the porosity of the sodium vanadium fluorophosphate cathode material is 15%-26%, more preferably 16%-24%.

Specifically, the powder resistivity of the sodium vanadium fluorophosphate cathode material is 28,000 Ω·cm, 30,000 Ω·cm, 32,000 Ω·cm, 34,000 Ω·cm, 36,000 Ω·cm, 38,000 Ω·cm, 40,000 Ω·cm, 42,000 Ω·cm, 44,000 Ω·cm, 46,000 Ω·cm, 48 000 Ω·cm, 50,000 Ω·cm, 52,000 Ω·cm, 54,000 Ω·cm, 56,000 Ω·cm, 58,000 Ω·cm, 60,000 Ω·cm, 65,000 Ω·cm, 70,000 Ω·cm, etc., but is not limited thereto. Preferably, the powder resistivity of the sodium vanadium fluorophosphate cathode material is 27,500 Ω·cm -62,000 Ω·cm, more preferably 27,900 Ω·cm -45,000 Ω·cm.

In some embodiments, in order to further improve the electrochemical performance of the sodium vanadium fluorophosphate cathode material, a mass of carbon in the nitrogen-doped carbon coating layers accounts for 1%-4% of a mass of the sodium vanadium fluorophosphate cathode material, which is conducive to forming the porous network structures of the nitrogen-doped carbon coating layers and improving the structural stability of the sodium vanadium fluorophosphate cathode material more effectively. When the content of carbon in the carbon coating layers is too low, the carbon coating layers have a relatively poor coating effect, the sodium vanadium fluorophosphate has low electron conductivity, and a capacity is relatively low. When the content of carbon is too high, ion transport is not facilitated, leading to a relatively low capacity of a sodium vanadium fluorophosphate cathode material. Specifically, the mass of carbon in the nitrogen-doped carbon coating layers may account for 1%, 1.2%, 1.5%, 1.8%, 2%, 2.3%, 2.5%, 2.8%, 3%, 3.2%, 3.5%, 3.8%, etc., of the mass of the sodium vanadium fluorophosphate cathode material, but is not limited thereto. Preferably, the mass of carbon in the nitrogen-doped carbon coating layers accounts for 1.6%-3.2% of the mass of the sodium vanadium fluorophosphate cathode material, more preferably 2.1%-3.2%.

The introduction of nitrogen atoms in the nitrogen-doped carbon coating layers changes electronic structures of carbon aerogel porous networks, improves the electron conductivity, is conducive to reducing the internal resistance of a sodium-ion battery using the sodium vanadium fluorophosphate cathode material, and improves the charge-discharge efficiency of the sodium-ion battery, such that the sodium vanadium fluorophosphate cathode material can maintain excellent performance in a cyclic charge-discharge process and can also show excellent electrochemical performance especially under high rate charge-discharge conditions. In some embodiments, a mass of nitrogen in the nitrogen-doped carbon coating layers accounts for 0.2%-1.5% of the mass of the sodium vanadium fluorophosphate cathode material. By controlling the mass of nitrogen in the nitrogen-doped carbon coating layers within the above range, the electronic structures of the nitrogen-doped carbon coating layers can be changed appropriately, and convenience is provided for further improving the electron conductivity and ion diffusivity of the sodium vanadium fluorophosphate cathode material and reducing the internal resistance of a sodium-ion battery using the sodium vanadium fluorophosphate cathode material, thereby improving the charge-discharge efficiency of the sodium-ion battery. Specifically, the mass of nitrogen in the nitrogen-doped carbon coating layers accounts for 0.2%, 0.4%, 0.6%, 0.8%, 1.0%, 1.2%, 1.4%, etc., of the mass of the sodium vanadium fluorophosphate cathode material, but is not limited thereto. Preferably, the mass of nitrogen in the nitrogen-doped carbon coating layers accounts for 0.4%-0.96% of the mass of the sodium vanadium fluorophosphate cathode material, more preferably 0.5%-0.95%.

It is understandable that since the sodium vanadium fluorophosphate particles hardly contain carbon and nitrogen, the content of nitrogen or the content of carbon in the nitrogen-doped carbon coating layers is the content of nitrogen or the content of carbon in the sodium vanadium fluorophosphate cathode material of the present application.

In some embodiments, in order to further improve the performance of the sodium vanadium fluorophosphate cathode material, a D50 particle size of the sodium vanadium fluorophosphate cathode material is 0.8 µm -14 µm, which can provide a relatively suitable diffusion path for sodium ions and avoid decreased electrochemical performance caused by the increase of the diffusion path of sodium ions since the particle size is too large. Wherein, the D50 particle size is a corresponding particle size value when the particle size of the particles of the sodium vanadium fluorophosphate cathode material is sorted from small to large and a volume distribution percentage reaches 50%. Specifically, the D50 particle size of the sodium vanadium fluorophosphate cathode material is 1 µm, 2 µm, 3 µm, 4 µm, 5 µm, 6 µm, 7 µm, 8 µm, 9 µm, 10 µm, etc., but is not limited thereto. Preferably, the D50 particle size of the sodium vanadium fluorophosphate cathode material is 1 µm -10 µm, and more preferably, the D50 particle size of the sodium vanadium fluorophosphate cathode material is 2 µm -9 µm. In some embodiments, a D100 particle size of the sodium vanadium fluorophosphate cathode material is less than 65 µm, which is conducive to further improving the performance of the sodium vanadium fluorophosphate cathode material. Preferably, the D100 particle size of the sodium vanadium fluorophosphate cathode material is 21 µm-65 µm, more preferably 21 µm-35 µm. Wherein, the D100 particle size is a corresponding particle size value when the particle size of the particles of the sodium vanadium fluorophosphate cathode material is sorted from small to large and a volume distribution percentage reaches 100%. Specifically, the D100 particle size of the sodium vanadium fluorophosphate cathode material may be 3 µm, 5 µm, 8 µm, 10 µm, 12 µm, 15 µm, 20 µm, 25 µm, 30 µm, etc., but is not limited thereto.

In some embodiments of the present application, a specific surface area of the sodium vanadium fluorophosphate cathode material is 12 m²/g -62 m²/g, which is conducive to reducing the powder resistivity of the sodium vanadium fluorophosphate cathode material. By controlling the specific surface area within the above range, preparation of a cathode plate is facilitated, and water in the sodium vanadium fluorophosphate cathode material is easily removed during drying of the cathode plate, such that convenience is provided for preparing the cathode plate and improving the performance of the cathode plate. Specifically, the specific surface area of the sodium vanadium fluorophosphate cathode material may be 12 m²/g, 14 m²/g, 16 m²/g, 18 m²/g, 20 m²/g, 22 m²/g, 24 m²/g, 26 m²/g, 28 m²/g, 29 m²/g, etc., but is not limited thereto. The specific surface area of the sodium vanadium fluorophosphate cathode material is preferably 12 m²/g-62 m²/g, further preferably 12 m²/g-30 m²/g, and more preferably 19 m²/g-30 m²/g.

In some embodiments of the present application, an average pore size of the nitrogen-doped carbon coating layers of the sodium vanadium fluorophosphorate cathode material is 1.9 nm-6 nm. The nitrogen-doped carbon coating layers with the average pore size of the sodium vanadium fluorophosphorate cathode material have relatively good ion diffusivity, which is conducive to further improving the comprehensive performance of the sodium vanadium fluorophosphorate cathode material. Specifically, the average pore size of the nitrogen-doped carbon coating layers of the sodium vanadium fluorophosphate cathode material is 3 nm, 3.5 nm, 4 nm, 4.5 nm, 5 nm, 5.5 nm, etc., but is not limited thereto. The average pore size of the nitrogen-doped carbon coating layers of the sodium vanadium fluorophosphate cathode material is preferably 3 nm-6 nm.

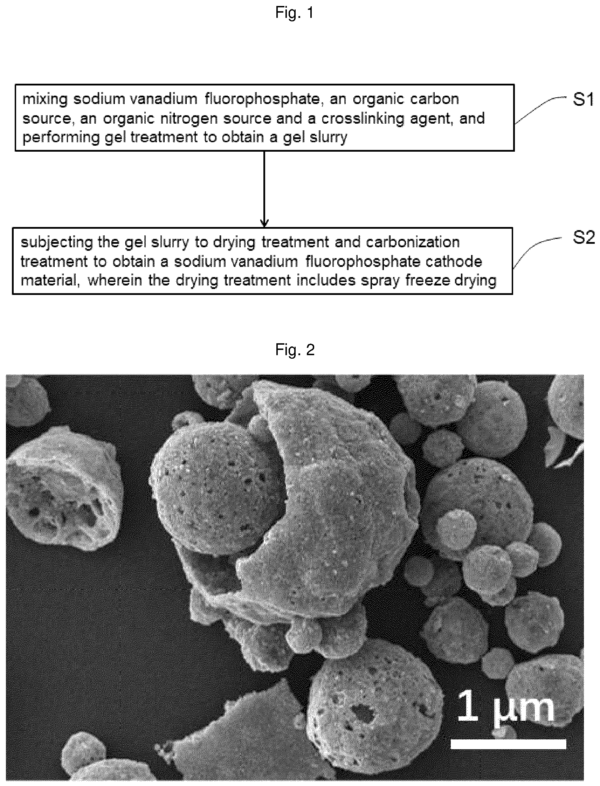

In a second aspect, an embodiment of the present application provides a preparation method for a sodium vanadium fluorophosphate cathode material. As shown in Fig. 1, the preparation method includes:
S1, mixing sodium vanadium fluorophosphate, an organic carbon source, an organic nitrogen source and a crosslinking agent, and performing gel treatment to obtain a gel slurry; and
S2, subjecting the gel slurry to drying treatment and carbonization treatment to obtain a sodium vanadium fluorophosphate cathode material, wherein the drying treatment includes spray freeze drying.

The sodium vanadium fluorophosphate cathode material as described above is successfully prepared by the preparation method using the organic carbon source and the organic nitrogen source as raw materials, in combination with a spray freeze drying method, a sol-gel method and the carbonization treatment. By means of the preparation method, not only can the sodium vanadium fluorophosphate cathode material form nitrogen-doped carbon coating layers with uniform porous network structures, thereby controlling the porosity of the sodium vanadium fluorophosphate cathode material within the range of 12%-33% and the ratio of Ig to Id of the nitrogen-doped carbon coating layers in the Raman spectrum within the range of 1-1.9, but also since the gel slurry obtained after the gel treatment is acidic and fluoride ions are easily hydrolyzed into HF under acidic conditions, the gel dried by the spray freeze drying method can also avoid the loss of F caused by volatilization of HF during heating and drying, thereby avoiding impure phases, such as sodium vanadium phosphate, generated by the loss of F in a finished product, and thus avoiding increased powder resistivity and decreased conductivity of the sodium vanadium fluorophosphate cathode material caused by the presence of the impure phases. Therefore, the sodium vanadium fluorophosphate cathode material prepared by the above method can maintain excellent performance in a cyclic charge-discharge process, and can also show excellent electrochemical performance especially under high rate charge-discharge conditions.

The organic carbon source and the organic nitrogen source may be selected in the prior art. In some embodiments, the organic carbon source includes one or more of carboxymethyl cellulose, starch, sucrose, or cyclodextrin. By using the above natural high polymer material as the carbon source, the surface of the obtained sodium vanadium fluorophosphate cathode material is coated with the amorphous carbon layers after treatment, and primary particles are connected to each other through carbon structures with porous networks, thereby being conducive to improving the performance of the sodium vanadium fluorophosphate cathode material significantly.

In some embodiments, the organic nitrogen source includes one or more of chitosan or gelatin. Due to wide raw material sources, convenience is provided for reducing the manufacturing cost of the sodium vanadium fluorophosphate cathode material, and the structure and morphology of the prepared sodium vanadium fluorophosphate cathode material can be better controlled, thereby further improving the uniformity and stability of the material, and thus improving the conductivity and electron transport rate of the sodium vanadium fluorophosphate cathode material more significantly.

In some preferred embodiments, a mass ratio of the organic carbon source to the organic nitrogen source is (1:1)-(3:1). A synergistic effect of the two can be better played, such that the prepared sodium vanadium fluorophosphate cathode material has better performance. Specifically, the mass ratio of the organic carbon source to the organic nitrogen source may be 1.2:1, 1.5:1, 1.8:1, 2:1, 2.3:1, 2.5:1, 2.8:1, etc., but is not limited thereto.

In some embodiments, a mass sum of the organic carbon source and the organic nitrogen source is 6%-18% of a mass of the sodium vanadium fluorophosphate in step S1, such that the sodium vanadium fluorophosphate cathode material prepared by the preparation method of the present application can have an appropriate carbon content and nitrogen content. As an example, the mass sum of the organic carbon source and the organic nitrogen source is 7%, 9%, 10%, 12%, 14%, 16%, 17%, etc., of the mass of the sodium vanadium fluorophosphate, but is not limited thereto.

The crosslinking agent plays the roles of crosslinking and complexing ions during the gel treatment, which may be selected in the prior art. In some embodiments, the crosslinking agent includes one or more of citric acid, tannic acid, digallic acid, or phytic acid, which plays the roles of crosslinking and complexing ions, such that the prepared sodium vanadium fluorophosphate cathode material has better electrochemical performance.

Preferably, a mass of the crosslinking agent is 15%-25% of the mass of the sodium vanadium fluorophosphate. By controlling an addition amount of the crosslinking agent within the range, not only can the good roles of crosslinking and complexing ions be achieved, but also the content of carbon in the sodium vanadium fluorophosphate cathode material can be controlled, avoiding that the content of carbon in a finally obtained product is too high or too low. As an example, the mass of the crosslinking agent is 15%, 16%, 17%, 18%, 19%, 20%, 21%, 22%, 23%, 24%, etc., of the mass of the sodium vanadium fluorophosphate, but is not limited thereto.

The sodium vanadium fluorophosphate used for the gel treatment may be selected in the prior art or prepared by a method in the prior art, which is not specially required in the present application. As an example, the sodium vanadium fluorophosphate is prepared by the following method: mixing and dissolving V₂O₅ and H₂C₂O₄·2H₂O in an aqueous solution according to an elemental molar ratio of the sodium vanadium fluorophosphate (such as 1:3), performing stirring at a certain temperature (such as 40°C-80°C) to form a blue solution, dissolving NaH₂PO₄, NaF and NH₄F in water (such as deionized water, distilled water, or pure water) according to a molar ratio of 2:1:2 to form a mixed solution, pouring the mixed solution into the blue solution, and performing stirring continuously for a reaction at 80-100°C until the solution is completely dissolved to form a blue-green solution, that is, to obtain a sodium vanadium fluorophosphate solution.

In some embodiments, the sodium vanadium fluorophosphate in a form of a sodium vanadium fluorophosphate solution is mixed with the organic carbon source, the organic nitrogen source and the crosslinking agent for the gel treatment. Certainly, the sodium vanadium fluorophosphate, the organic carbon source, the organic nitrogen source and the crosslinking agent may also be mixed with a solvent (such as deionized water, distilled water, or pure water, etc.) for the gel treatment. A corresponding implementation method may be selected by those skilled in the art according to specific conditions, which is not limited in the present application.

In some embodiments, a temperature of the gel treatment is 30°C -50°C, and a time of the gel treatment is 2 h-6 h. The gel treatment further includes stirring, and a rotation speed of stirring is 200 rpm-500 rpm. In the embodiment, by controlling process conditions, such as the temperature and time of the gel treatment, the organic carbon source, the organic nitrogen source and the crosslinking agent can undergo a gelation reaction more efficiently with the sodium vanadium fluorophosphate, thereby improving the performance of a sodium vanadium fluorophosphate cathode material. Specifically, the temperature of the gel treatment is 35°C, 40°C, 45°C, 48°C, etc., but is not limited thereto. The time of the gel treatment is 2 h, 3 h, 4 h, 5 h, etc., but is not limited thereto. The rotation speed of stirring is 250 rpm, 300 rpm, 350 rpm, 400 rpm, 450 rpm, etc., but is not limited thereto.

In some embodiments, an atomization pressure of the spray freeze drying is 0.1 MPa-0.4 MPa. By controlling the atomization pressure of the spray freeze drying within the above range, the drying efficiency is improved, the nitrogen-doped carbon coating layers with more uniform porous network structures are formed, the loss of F during the drying is further reduced, and impure phases, such as sodium vanadium phosphate, generated thereby are reduced, thus improving the performance of the sodium vanadium fluorophosphate cathode material. Specifically, the atomization pressure of the spray freeze drying may be 0.1 MPa, 0.15 MPa, 0.2 MPa, 0.25 MPa, 0.3 MPa, 0.35 MPa, etc., but is not limited thereto.

In some embodiments, the spray freeze drying includes injecting the gel slurry into an atomizer at a flow rate of 1 mL/min-5 mL/min by utilizing a medium or miniature high-pressure atomization pump, atomizing the gel slurry into small droplets at an air inlet flow rate of 10 L/min-16 L/min, and enabling the droplets to flow into a container containing a cryogenic medium for freezing to obtain icy spherical particles. In some embodiments, the cryogenic medium includes one of liquid nitrogen at -196°C, dry ice/ethanol at -80°C, ethanol at -40°C, or ethanol at -20°C.

A sample obtained after the drying treatment is subjected to the carbonization treatment. In some embodiments, the carbonization treatment includes stage carbonization treatment, the stage carbonization treatment sequentially includes first-stage carbonization treatment, second-stage carbonization treatment and third-stage carbonization treatment, a temperature of the first-stage carbonization treatment is 100 °C-120 °C (e.g., 105 °C, 110 °C, 115 °C, etc.), a holding time of the first-stage carbonization treatment is 2 h-4 h (e.g., 2.5 h, 3 h, 3.5 h, etc.), a temperature of the second-stage carbonization treatment is 300 °C-350 °C (e.g., 310°C, 320°C, 330°C, 340°C, etc.), a holding time of the second-stage carbonization treatment is 1 h-3 h (e.g., 1.5 h, 2 h, 2.5 h, etc.), a temperature of the third-stage carbonization treatment is 600 °C-750 °C (e.g., 620 °C, 640 °C, 660 °C, 680 °C, 700 °C, 720 °C, 740 °C, etc.), and a holding time of the third-stage carbonization treatment is 5 h-8 h (e.g., 5.5 h, 6.5 h, 7 h, 7.5 h, etc.). The more uniform nitrogen-doped carbon coating layers can be formed through the above stage carbonization treatment. Preferably, the carbonization treatment is performed in an inert gas, and the inert gas may include one or more of argon and nitrogen.

In some embodiments, a material obtained after the carbonization treatment is subjected to crushing, sieving and iron removal to obtain a sodium vanadium fluorophosphate cathode material, wherein a crushing method is not limited, and a jet mill or a mechanical mill may be used for the crushing. By performing the sieving after the crushing, the uniformity of finished particles of the obtained sodium vanadium fluorophosphate cathode material is improved, avoiding an adverse impact of large particles in a finished product of the sodium vanadium fluorophosphate cathode material on electrical performance. Preferably, a particle size range of the sodium vanadium fluorophosphate cathode material obtained after the sieving is as follows: 0.8 µm≤D50≤14 µm, and D100≤65 µm. More preferably, the particle size range of the sodium vanadium fluorophosphate cathode material obtained after the sieving is as follows: 1 µm≤D50≤10 µm, and D100≤35 µm.

Preferably, an ambient humidity for the crushing, sieving and iron removal is controlled to be less than 15% to prevent that the sodium vanadium fluorophosphate cathode material absorbing too much water during the treatment leads to decreased electrical performance. Preferably, a content of magnetic foreign matter in the sodium vanadium fluorophosphate cathode material obtained after the crushing, sieving and iron removal is less than 150 ppm, a content of free sodium is less than 100 ppm, and a content of water is less than 1,000 ppm.

In some embodiments, a sodium vanadium fluorophosphate cathode material obtained by the preparation method for a sodium vanadium fluorophosphate cathode material provided in the present application is the sodium vanadium fluorophosphate cathode material as described above, the structure, performance and the like of which are not repeatedly described herein.

In a third aspect, the present application provides a cathode plate. The cathode plate includes a current collector and an active material layer arranged on a surface of the current collector, and the active material layer includes the sodium vanadium fluorophosphate cathode material according to any one of the foregoing embodiments or a sodium vanadium fluorophosphate cathode material prepared by the preparation method for a sodium vanadium fluorophosphate cathode material according to any one of the foregoing embodiments.

The cathode plate includes the sodium vanadium fluorophosphate cathode material described above, thus having the electrochemical performance of good stability and excellent cycle performance and rate capability.

In a fourth aspect, the present application provides a sodium-ion battery. The sodium-ion battery includes the cathode plate described above.

Since the sodium-ion battery includes the cathode plate described above, the electrochemical performance, such as cycle performance and rate capability, is improved significantly, which is especially excellent under high rate charge-discharge conditions. Therefore, the sodium-ion battery can be better applied to a variety of use scenarios.

In a fifth aspect, the present application provides an electrical device. The electrical device includes the sodium-ion battery described above. The electrical device, such as an electric vehicle, has relatively good power and stability due to the use of the sodium-ion battery described above.

Some specific embodiments are listed below. It should be noted that the embodiments described below are illustrative, which are intended only to explain the present disclosure and shall not be understood as limitations of the present application. Products without specific technologies or conditions in the embodiments are used according to technologies or conditions described in documents in the art or specifications of the products. Reagents or instruments used without specific manufacturers are conventional products available on the market.

### 1. Preparation method

### Example 1

First, 0.5511 g of V₂O₅ and 1.1403 g of H₂C₂O₄·2H₂O were weighed and mixed at a molar ratio of 3:1, dissolved in 50 mL of distilled water and stirred at 60°C for 2 h to obtain a blue VOC₂O₄ solution. 2.5810 g of NaH₂PO₄, 0.8608 g of Na₂SO₄ and 0.5141 g of NaF were weighed at a molar ratio of 3:1:2 and dissolved in distilled water to obtain 50 mL of a solution. After being mixed with the VOC₂O₄ solution, the solution was heated to 100°C for a condensation reflux reaction for 8 h until being turned into a blue-green solution to obtain an NVPF solution.

Then, carboxymethyl cellulose as an organic carbon source and chitosan as an organic nitrogen source were mixed at a mass ratio of 3:1, then mixed with and dissolved in the NVPF solution, wherein a total addition amount of the former two was 7% of a mass of NVPF in the NVPF solution. Then, phytic acid as a crosslinking agent that was 20% of the mass of NVPF was added into the NVPF solution for gel treatment to obtain a gel slurry, wherein a temperature of the gel treatment was 50°C, a rotation speed of stirring during the period was 500 rpm, and a time of the gel treatment was 2 h.

Then, the gel slurry was pressurized by a miniature high-pressure atomization pump at a pressure of 0.4 MPa, the gel slurry was injected into an atomizer at a flow rate of 5 mL/min, the gel slurry was atomized into small droplets at an air inlet flow rate of 10 L/min, and the droplets were quickly sprayed into a container containing liquid nitrogen at -196°C for quick freezing and then placed in a vacuum freeze dryer with a cold trap of -80 °C and a vacuum degree of 8 Pa for freeze drying for 48 h to obtain a dried sample.

Finally, the obtained dried sample was placed into a tube furnace for stage carbonization treatment under high-purity argon at the following procedure: heating preservation at 120°C for 4 h, heating preservation at 350°C for 2 h, and sintering at 750°C for 5 h. The obtained sample was subjected to crushing, sieving and iron removal to obtain a sodium vanadium fluorophosphorate cathode material.

The micromorphology of the sodium vanadium fluorophosphate cathode material is shown in Fig. 2. In the SEM image, it can be clearly seen that porous carbon aerogel networks formed by nitrogen-doped carbon coating layers are uniformly coated on surfaces of NVPF particles in the sodium vanadium fluorophosphate cathode material prepared in Example 1. Such porous structures not only provide rich channels for the transport of sodium ions, but also increase the surface area, thereby improving the electron conductivity.

### Example 2

First, 0.5511 g of V₂O₅ and 1.1403 g of H₂C₂O₄·2H₂O were weighed and mixed at a molar ratio of 3:1, dissolved in 50 mL of distilled water and stirred at 80°C for 2 h to obtain a blue VOC₂O₄ solution. 2.5810 g of NaH₂PO₄, 0.8608 g of Na₂SO₄ and 0.5141 g of NaF were weighed at a molar ratio of 3:1:2 and dissolved in distilled water to obtain 50 mL of a solution. After being mixed with the VOC₂O₄ solution, the solution was heated to 80°C for a condensation reflux reaction for 8 h until being turned into a blue-green solution to obtain an NVPF solution.

Then, sucrose as an organic carbon source and chitosan as an organic nitrogen source were mixed at a mass ratio of 2:1, then mixed with and dissolved in the NVPF solution, wherein a total addition amount of the former two was 8% of a mass of NVPF in the NVPF solution. Then, tannic acid as a crosslinking agent that was 16% of the mass of NVPF was added into the NVPF solution for gel treatment to obtain a gel slurry, wherein a temperature of the gel treatment was 50°C, a rotation speed of stirring during the period was 500 rpm, and a time of the gel treatment was 3 h.

Then, the gel slurry was pressurized by a miniature high-pressure atomization pump at a pressure of 0.1 MPa, the gel slurry was injected into an atomizer at a flow rate of 1 mL/min, the gel slurry was atomized into small droplets at an air inlet flow rate of 16 L/min, and the droplets were quickly sprayed into a container containing dry ice/ethanol solution at -80°C for quick freezing and then placed in a vacuum freeze dryer with a cold trap of -80°C and a vacuum degree of 8 Pa for freeze drying for 48 h to obtain a dried sample.

Finally, the obtained dried sample was placed into a tube furnace for stage carbonization treatment under high-purity argon at the following procedure: heating preservation at 120°C for 2 h, heating preservation at 350°C for 3 h, and sintering at 750°C for 5 h. The obtained sample was subjected to crushing, sieving and iron removal to obtain a sodium vanadium fluorophosphorate cathode material.

### Example 3

First, 0.5511 g of V₂O₅ and 1.1403 g of H₂C₂O₄·2H₂O were weighed and mixed at a molar ratio of 3:1, dissolved in 50 mL of distilled water and stirred at 40°C for 2 h to obtain a blue VOC₂O₄ solution. 2.5810 g of NaH₂PO₄, 0.8608 g of Na₂SO₄ and 0.5141 g of NaF were weighed at a molar ratio of 3:1:2 and dissolved in distilled water to obtain 50 mL of a solution. After being mixed with the VOC₂O₄ solution, the solution was heated to 90°C for a condensation reflux reaction for 6 h until being turned into a blue-green solution to obtain an NVPF solution.

Then, cyclodextrin as an organic carbon source and chitosan as an organic nitrogen source were mixed at a mass ratio of 1:1, then mixed with and dissolved in the NVPF solution, wherein a total addition amount of the former two was 8% of a mass of NVPF in the NVPF solution. Then, citric acid as a crosslinking agent that was 15% of the mass of NVPF was added into the NVPF solution for gel treatment to obtain a gel slurry, wherein a temperature of the gel treatment was 50°C, a rotation speed of stirring was 400 rpm, and a time of the gel treatment was 2 h.

Then, the gel slurry was pressurized by a miniature high-pressure atomization pump at a pressure of 0.1 MPa, the gel slurry was injected into an atomizer at a flow rate of 1 mL/min, the gel slurry was atomized into small droplets at an air inlet flow rate of 16 L/min, and the droplets were quickly sprayed into a container containing an ethanol solution at -40°C for quick freezing and then placed in a vacuum freeze dryer with a cold trap of -80°C and a vacuum degree of 8 Pa for freeze drying for 48 h to obtain a dried sample.

Finally, the obtained dried sample was placed into a tube furnace for stage carbonization treatment under high-purity nitrogen at the following procedure: heating preservation at 120°C for 3 h, heating preservation at 350°C for 2 h, and sintering at 750°C for 8 h. The obtained sample was subjected to crushing, sieving and iron removal to obtain a sodium vanadium fluorophosphorate cathode material.

### Example 4

First, 0.5511 g of V₂O₅ and 1.1403 g of H₂C₂O₄·2H₂O were weighed and mixed at a molar ratio of 3:1, dissolved in 50 mL of distilled water and stirred at 40°C for 2 h to obtain a blue VOC₂O₄ solution. 2.5810 g of NaH₂PO₄, 0.8608 g of Na₂SO₄ and 0.5141 g of NaF were weighed at a molar ratio of 3:1:2 and dissolved in distilled water to obtain 50 mL of a solution. After being mixed with the VOC₂O₄ solution, the solution was heated to 80°C for a condensation reflux reaction for 6 h until being turned into a blue-green solution to obtain an NVPF solution.

Then, carboxymethyl cellulose as an organic carbon source and gelatin as an organic nitrogen source were mixed at a mass ratio of 3:1, then mixed with and dissolved in the NVPF solution, wherein a total addition amount of the former two was 8% of a mass of NVPF in the NVPF solution. Then, digallic acid as a crosslinking agent that was 16% of the mass of NVPF was added into the NVPF solution for gel treatment to obtain a gel slurry, wherein a temperature of the gel treatment was 30°C, a rotation speed of stirring was 300 rpm, and a time of the gel treatment was 4 h.

Then, the gel slurry was pressurized by a miniature high-pressure atomization pump at a pressure of 0.2 MPa, the gel slurry was injected into an atomizer at a flow rate of 2 mL/min, the gel slurry was atomized into small droplets at an air inlet flow rate of 12 L/min, and the droplets were quickly sprayed into a container containing an ethanol solution at -20°C for quick freezing and then placed in a vacuum freeze dryer with a cold trap of -80°C and a vacuum degree of 8 Pa for freeze drying for 48 h to obtain a dried sample.

Finally, the obtained dried sample was placed into a tube furnace for stage carbonization treatment under high-purity argon at the following procedure: heating preservation at 120°C for 2 h, heating preservation at 350°C for 2 h, and sintering at 750°C for 8 h. The obtained sample was subjected to crushing, sieving and iron removal to obtain a sodium vanadium fluorophosphorate cathode material.

### Example 5

First, 0.5511 g of V₂O₅ and 1.1403 g of H₂C₂O₄·2H₂O were weighed and mixed at a molar ratio of 3:1, dissolved in 50 mL of distilled water and stirred at 40°C for 2 h until a blue VOC₂O₄ solution was obtained. 2.5810 g of NaH₂PO₄, 0.8608 g of Na₂SO₄ and 0.5141 g of NaF were weighed at a molar ratio of 3:1:2 and dissolved in distilled water to obtain 50 mL of a solution. After being mixed with the VOC₂O₄ solution, the solution was heated to 80°C for a condensation reflux reaction for 10 h until being turned into a blue-green solution to obtain an NVPF solution.

Then, sucrose as an organic carbon source and gelatin as an organic nitrogen source were mixed at a mass ratio of 1:1, then mixed with and dissolved in the NVPF solution, wherein a total addition amount of the former two was 8% of a mass of NVPF in the NVPF solution. Then, phytic acid that was 15% of the mass of NVPF was added into the NVPF solution for gel treatment to obtain a gel slurry, wherein a temperature of the gel treatment was 40°C, a rotation speed of stirring was 500 rpm, and a time of the gel treatment was 2.5 h.

Then, the gel slurry was pressurized by a miniature high-pressure atomization pump at a pressure of 0.3 MPa, the gel slurry was injected into an atomizer at a flow rate of 2 mL/min, the gel slurry was atomized into small droplets at an air inlet flow rate of 14 L/min, and the droplets were quickly sprayed into a container containing liquid nitrogen at -196°C for quick freezing and then placed in a vacuum freeze dryer with a cold trap of -80°C and a vacuum degree of 8 Pa for freeze drying for 48 h to obtain a dried sample.

Finally, the obtained dried sample was placed into a tube furnace for stage carbonization treatment under high-purity nitrogen atmosphere at the following procedure: heating preservation at 120°C for 4 h, heating preservation at 350°C for 2 h, and sintering at 750°C for 6 h. The obtained sample was subjected to crushing, sieving and iron removal to obtain a sodium vanadium fluorophosphorate cathode material.

### Example 6

A difference from Example 1 is that the total addition amount of the carboxymethyl cellulose as the organic carbon source and the chitosan as the organic nitrogen source was 20% of the mass of NVPF in the NVPF solution.

### Example 7

A difference from Example 1 is that the total addition amount of the carboxymethyl cellulose as the organic carbon source and the chitosan as the organic nitrogen source was 4% of the mass of NVPF in the NVPF solution.

### Example 8

A difference from Example 1 is that the mass ratio of the carboxymethyl cellulose as the organic carbon source to the chitosan as the organic nitrogen source during mixing was 5:1.

### Example 9

A difference from Example 1 is that the mass ratio of the carboxymethyl cellulose as the organic carbon source to the chitosan as the organic nitrogen source during mixing was 1:2.

### Example 10

A difference from Example 1 is that the gel slurry was pressurized by a miniature high-pressure atomization pump at a pressure of 0.2 MPa and injected into an atomizer at a flow rate of 14 mL/min at an air inlet flow rate of 8 L/min.

### Example 11

One of differences from Example 1 is that the gel slurry was pressurized by a miniature high-pressure atomization pump at a pressure of 0.6 MPa and injected into an atomizer at a flow rate of 6 mL/min at an air inlet flow rate of 15 L/min.

A second difference is that the obtained dried sample was placed into a tube furnace for stage carbonization treatment under high-purity argon at the following procedure: heating preservation at 120°C for 4 h, heating preservation at 350°C for 2 h, and sintering at 650°C for 5 h.

### Example 12

A difference from Example 1 is that the obtained dried sample was placed into a tube furnace for stage carbonization treatment under high-purity argon at the following procedure: heating preservation at 120°C for 2 h, rapid heating to 750°C at 10°C/min, and sintering at 750°C for 2 h.

### Comparative Example 1

A difference from Example 1 is that after the gel slurry was atomized, a dried sample was obtained by using a high-temperature gas with a temperature of higher than 120°C for gelatinizing atomized particles to replace rapid freezing and freeze drying and then performing spray drying treatment. Other steps were the same as those in Example 1, and a sodium vanadium fluorophosphate cathode material was prepared.

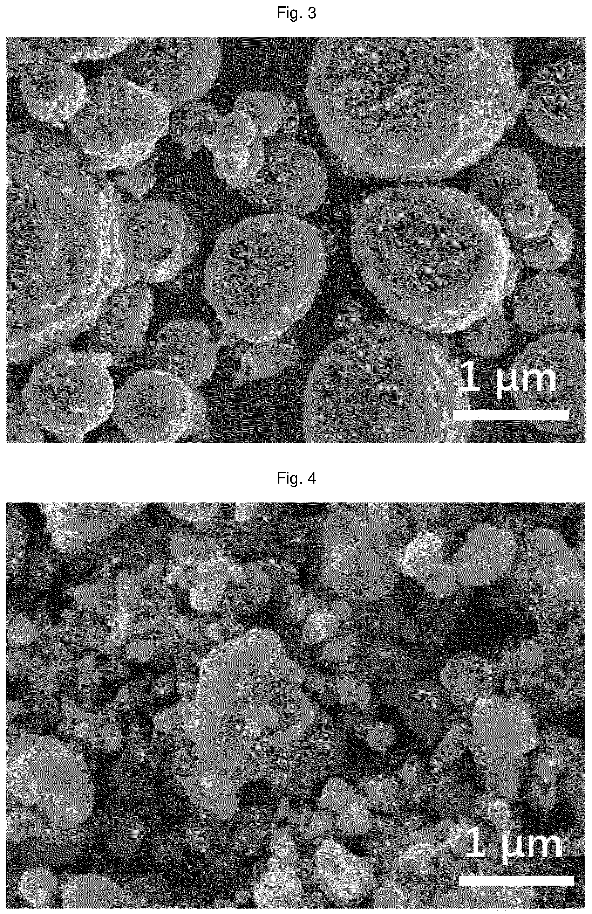

The micromorphology of the sodium vanadium fluorophosphate cathode material is shown in Fig. 3. Non-porous carbon layers formed on a surface of the cathode material are simply covered on surfaces of NVPF particles, forming relatively smooth and agglomerated carbon layers. Although such structure also plays a certain role of protection, compared with porous carbon aerogel coating layers, the ion and electron transport performance is relatively poor.

### Comparative Example 2

A difference from Example 1 is that the gel slurry was directly dried through a vacuum drying oven at 80°C for 10 h to obtain a dried sample. Other steps were the same as those in Example 1, and a nitrogen-doped carbon aerogel coated sodium vanadium fluorophosphate cathode material was prepared.

The micromorphology of the sodium vanadium fluorophosphate cathode material is shown in Fig. 4. In the present comparative example, porous carbon obtained by a vacuum drying technology is simply mixed with NVPF particles without the formation of obvious coating layers. Although such structure can introduce advantages of the porous carbon, the structural stability and the ion/electron transport performance are both inferior to the nitrogen-doped carbon coating layers in the sodium vanadium fluorophosphate cathode materials obtained in examples.

### 2. Test methods

### 1, Property tests of sodium vanadium fluorophosphate cathode materials

Carbon content test: A carbon sulfur analyzer was used for testing.

Nitrogen content test: The content of N was determined by an element analyzer using a high-temperature combustion method with reference to the standard GB/T 37588-2019.

Particle size test: Measurement of the particle size was completed by measuring the intensity of scattered light generated when a laser beam passes through a dispersed particle sample using a laser particle size analyzer. A formed scattering spectrogram was analyzed and calculated to obtain the particle size distribution of particles.

Specific surface area test: A gas adsorption BET method was used with nitrogen as an adsorbate and helium as a carrier gas. When a mixed gas flowed through a solid substance, the solid substance physically adsorbed nitrogen at low temperature, while the carrier gas was not adsorbed. Adsorption capacities under different relative pressures were measured, and the specific surface area was calculated.

Average pore size test: The average pore size was calculated and obtained after observation by SEM and statistics.

I_{D}/I_{G}: A Raman spectrogram of a sample to be tested was tested, and the value of I_{D}/I_{G} was calculated and obtained according to the intensity I_{D} of D peaks and the intensity I_{G} of G peaks. Specific test method: 10 mg of a sample was taken with a medicine spoon and placed in the middle of slide glass, and another slide glass was selected and pressed on the sample for a while for compression molding without dispersing. A measuring range was 50 nm-4,000 nm, and a 405 nm laser was selected.

Porosity test method: A method for determination of the porosity of lightweight porous materials was used with reference to TCSTM 00553-2022.

Powder resistivity: A four-probe method was used for testing at a pressure of 10 MPa.

A diffusion coefficient of sodium ions was tested by electrochemical impedance spectroscopy (EIS).

Test results of the above tests of the sodium vanadium fluorophosphate cathode materials prepared in various examples and comparative examples are listed in Table 1 below.

### 2, Electrochemical performance test

The sodium vanadium fluorophosphorate cathode materials prepared in examples and cathode materials prepared in comparative examples were uniformly mixed with conductive carbon black (Super P) and polyvinylidene fluoride (PVDF) at a mass ratio of 7:2:1, respectively, dispersed into an N-methyl-2-pyrrolidone (NMP) solvent to form a uniform paste, and coated on aluminum foil by a scraper or a four-sided coater to prepare a cathode plate. Then, the paste was coated on an aluminum foil collector by a tablet press to form a membrane layer with a thickness of 150 nm, and then subjected to vacuum drying at 120°C for 8 h. The aluminum foil coated with the material was cut into a circular electrode plate with a diameter of 12 mm, and then a CR2032 button battery was assembled. A metallic sodium sheet was used as a counter electrode, and an electrolyte using 1 M NaClO₄ as a solute was used. The electrolyte was obtained by mixing propylene carbonate and vinyl carbonate at a volume ratio of 1:1 and containing vinyl fluorocarbonate with a mass fraction of 5% as an additive. A diaphragm selected was a Whatman glass fiber.

A constant current charge-discharge cycle in the system was tested by Land to evaluate the electrochemical performance. A first low current and constant current charge-discharge test was carried out at a rate of 0.1 C, a constant current charge-discharge rate in the cycle test was set at 1 C, a rate test was carried out within a charge-discharge rate range from 0.1 C to 20 C, and a voltage range was 2.0 V-4.0 V.

An efficiency value was obtained by calculating a ratio of an initial specific discharge capacity at 0.1 C to an initial specific charge capacity at 0.1 C.

Test results of the electrochemical performance test of the sodium vanadium fluorophosphate cathode materials prepared in various examples and comparative examples are listed in Table 2 below.

### 3. Analysis of test results in various examples and comparative examples

**Table 1**

| Group | Content of carbon/ % | Content of nitrogen/ % | D50 particle size/µm | D100 particle size/µm | Specific surface area/m²/g | Average pore size/nm | Ig/Id | Porosity/ % | Powder resistivity/(Ω. cm) |
|---|---|---|---|---|---|---|---|---|---|
| Example 1 | 2.3 | 0.5 | 2 | 32 | 20 | 3 | 1.1 | 19 | 28440 |
| Example 2 | 2.3 | 0.7 | 3 | 31 | 21 | 3 | 1.7 | 19 | 32497 |
| Example 3 | 2.3 | 0.6 | 9 | 30 | 26 | 3 | 1.4 | 16 | 29016 |
| Example 4 | 2.2 | 0.5 | 2 | 31 | 29 | 6 | 1.2 | 18 | 42258 |
| Example 5 | 2.1 | 0.7 | 7 | 34 | 19 | 3 | 1.2 | 24 | 44988 |
| Example 6 | 3.2 | 0.95 | 2 | 33 | 29 | 3 | 1 | 33 | 27950 |
| Example 7 | 1.6 | 0.25 | 8 | 33 | 15 | 5 | 1.6 | 12 | 72544 |
| Example 8 | 2.3 | 0.21 | 2 | 31 | 25 | 6 | 1.9 | 15 | 56289 |
| Example 9 | 2.3 | 0.96 | 10 | 30 | 24 | 4 | 1.1 | 21 | 61133 |
| Example 10 | 2.3 | 0.4 | 14 | 65 | 15 | 6 | 1.4 | 15 | 44642 |
| Example 11 | 2.3 | 0.6 | 0.8 | 21 | 51 | 5 | 1 | 23 | 37451 |
| Example 12 | 2 | 0.7 | 1 | 34 | 62 | 1.9 | 1.2 | 24 | 34171 |
| Comparative Example 1 | 2.2 | 0.7 | 8 | 32 | 33 | 4 | 1.6 | 17 | 88700 |
| Comparative Example 2 | 2.3 | 0.6 | 7 | 33 | 36 | 3 | 1.6 | 22 | 99190 |

**Table 2**

| Group | Initial specific charge capacity at 0.1 C mAh/g | Initial specific discharge capacity at 0.1 C mAh/g | Efficiency % | Initial specific charge capacity at 1 C mAh/g | Initial specific discharge capacity at 1 C mAh/g | Efficiency % | Specific discharge capacity after 100 cycles at 1 C mAh/g | Capacity retention rate after 100 cycles at 1 C% | Initial specific charge capacity at 20 C mAh/g | Initial specific discharge capacity at 20 C mAh/g | Efficiency % |
|---|---|---|---|---|---|---|---|---|---|---|---|
| Example 1 | 130.1 | 125.5 | 96.46 | 128.80 | 124.25 | 96.46 | 123.47 | 99.38 | 110.77 | 106.23 | 95.90 |
| Example 2 | 128.94 | 122.56 | 95.05 | 126.36 | 119.97 | 94.95 | 115.85 | 96.56 | 108.67 | 102.58 | 94.39 |
| Example 3 | 129.13 | 122.56 | 94.91 | 127.84 | 121.21 | 94.82 | 119.33 | 98.45 | 108.15 | 102.42 | 94.70 |
| Example 4 | 129.88 | 124.59 | 95.93 | 128.45 | 123.59 | 96.22 | 121.18 | 98.05 | 109.83 | 103.20 | 93.97 |
| Example 5 | 127.95 | 123.64 | 96.63 | 125.26 | 119.81 | 95.64 | 118.15 | 98.62 | 108.48 | 101.96 | 93.99 |
| Example 6 | 127.45 | 119.74 | 93.95 | 113.43 | 105.25 | 92.79 | 83.72 | 79.54 | 76.57 | 67.89 | 88.67 |
| Example 7 | 116.09 | 109.05 | 93.94 | 101.69 | 90.73 | 89.22 | 63.40 | 69.87 | 73.32 | 56.53 | 77.10 |
| Example 8 | 128.54 | 118.82 | 92.44 | 107.46 | 95.33 | 88.71 | 61.84 | 64.87 | 66.73 | 49.86 | 74.71 |
| Example 9 | 113.84 | 108.23 | 95.08% | 92.89 | 85.53 | 92.07 | 52.90 | 61.85 | 68.93 | 50.66 | 73.49 |
| Example 10 | 110.75 | 104.05 | 93.95 | 90.11 | 82.22 | 91.25 | 50.77 | 61.75 | 55.96 | 43.00 | 76.85 |
| Example 11 | 127.82 | 121.15 | 94.79 | 125.72 | 117.32 | 93.32 | 89.74 | 76.49 | 98.33 | 88.95 | 90.47 |
| Example 12 | 125.84 | 115.01 | 91.39 | 109.93 | 100.51 | 91.43 | 66.04 | 65.70 | 75.96 | 62.62 | 82.43 |
| Comparative Example 1 | 120.50 | 112.60 | 93.44 | 100.74 | 90.34 | 89.68 | 99.32 | 109.94 | 62.56 | 47.25 | 75.53 |
| Comparative Example 2 | 110.00 | 99.20 | 90.18 | 91.96 | 79.59 | 86.55 | 79.56 | 99.96 | 57.11 | 41.62 | 72.89 |

It can be seen from the above contents that by applying the technical solutions of the present application, the sodium vanadium fluorophosphate cathode material contains the nitrogen-doped carbon coating layers, the ratio of Ig to Id of the nitrogen-doped carbon coating layers in the Raman spectrum is controlled within the range of 1-1.9, and the porosity of the sodium vanadium fluorophosphate cathode material is controlled within the range of 12%-33%, such that the nitrogen-doped carbon coating layers show relatively uniform porous network structures, convenience is provided for effectively controlling the volume change and agglomeration of the sodium vanadium fluorophosphate particles in a charge-discharge process, and thus the structural stability of the sodium vanadium fluorophosphate cathode material is enhanced. Meanwhile, the nitrogen-doped carbon coating layers of the sodium vanadium fluorophosphate cathode material of the present application having the porous amorphous carbon coating structures and the introduction of nitrogen atoms are conducive to controlling the powder resistivity of the sodium vanadium fluorophosphate cathode material within the range of 27,000 Ω·cm -73,000 Ω·cm and conducive to enhancing the conductivity and ion diffusivity of the sodium vanadium fluorophosphate cathode material, such that the sodium vanadium fluorophosphate cathode material has excellent electrochemical performance in terms of cycle performance and rate capability.

Specifically, as can be seen in combination with the electrochemical performance test data in Table 2, Examples 1-5 and Comparative Examples 1-2 of the present application mainly have the differences that the gel slurry is not subjected to drying treatment by a spray freeze drying method in Comparative Examples 1 and 2, nitrogen-doped carbon coating layers formed by uniform porous carbon aerogel networks are not obtained on surfaces of sodium vanadium fluorophosphate particles, the ion and electron transport performance is poor, and the powder resistivity is high. Therefore, the rate capability and cycle performance of sodium-ion batteries containing the cathode materials prepared in the two comparative examples are far inferior to the sodium vanadium fluorophosphate cathode materials prepared in Examples 1-5, and the differences are particularly obvious especially under high rate charge-discharge conditions.

Since the addition amounts of the organic carbon source and the organic nitrogen source are different in Examples 1, 6 and 7, it can be seen from the results in Table 1 and Table 2 that the content of carbon and the content of nitrogen in the prepared sodium vanadium fluorophosphate cathode materials have great differences. When the content of carbon and the content of nitrogen in the sodium vanadium fluorophosphate cathode material are too low, since the nitrogen-doped carbon coating layers have a relatively poor coating effect, the sodium vanadium fluorophosphate has low electron conductivity, and a capacity is relatively low. When the content of carbon in the sodium vanadium fluorophosphate cathode material is too high, ion transport is not facilitated, and a finished product of the sodium vanadium fluorophosphate cathode material has a relatively low capacity. By controlling the content of carbon and the content of nitrogen in the sodium vanadium fluorophosphate cathode material within a certain range, convenience is provided for improving the capacity and cycle performance of the sodium vanadium fluorophosphate cathode material.

Since the addition ratios of the organic carbon source and the organic nitrogen source are different in Examples 1, 8 and 9, it can be seen from the results in Table 1 and Table 2 that the electrochemical performance of the obtained sodium vanadium fluorophosphate cathode materials is affected. By controlling the content of carbon and the content of nitrogen in the nitrogen-doped carbon coating layers of the sodium vanadium fluorophosphate cathode material within a certain range, porous network structures that are more conducive to electron and ion conduction can be formed, thereby further improving the electrochemical performance of the sodium vanadium fluorophosphate cathode material.

As can be seen in combination with the results of Examples 10-12 and Example 1 in Table 1 and Table 2, the particle size and specific surface area of the sodium vanadium fluorophosphate cathode material have a certain impact on the electrochemical performance, and a diffusion path of sodium ions is related to the particle size of the cathode material. When the particle size is too large, increase of the diffusion path of sodium ions is likely to be caused, leading to decreased electrochemical performance of the sodium vanadium fluorophosphate cathode material. When the particle size of the sodium vanadium fluorophosphate cathode material is too small, the specific surface area is increased, the sodium vanadium fluorophosphate cathode material is prone to absorbing water, and the cathode plate is not prone to drying, also leading to decrease of the electrochemical performance.

It should be noted that the present application is not limited to the above embodiments. The above embodiments are only examples, and embodiments that have essentially the same composition as the technical ideas and achieve the same effects within the scope of the technical solutions of the present application are included in the technical scope of the present application. In addition, without deviating from the scope of main purposes of the present application, other embodiments constructed by applying various variations that may be thought of by those skilled in the art to the embodiments or by combining some of constituent elements of the embodiments shall also be included in the scope of the present application.

## Claims

1. A sodium vanadium fluorophosphate cathode material, wherein the sodium vanadium fluorophosphate cathode material comprises sodium vanadium fluorophosphate particles and nitrogen-doped carbon coating layers on surfaces of the sodium vanadium fluorophosphate particles, a ratio of Ig to Id of the nitrogen-doped carbon coating layers in a Raman spectrum is 1-1.9, a porosity of the sodium vanadium fluorophosphate cathode material is 12%-33%, and a powder resistivity of the sodium vanadium fluorophosphate cathode material is 27,000 Ω·cm-73,000 Ω·cm.

2. The sodium vanadium fluorophosphate cathode material according to claim 1, wherein a mass of nitrogen in the nitrogen-doped carbon coating layers accounts for 1%-4% of a mass of the sodium vanadium fluorophosphate cathode material; and
a mass of nitrogen in the nitrogen-doped carbon coating layers accounts for 0.2%-1.5% of the mass of the sodium vanadium fluorophosphate cathode material.

3. The sodium vanadium fluorophosphate cathode material according to claim 1 or 2, wherein a D50 particle size of the sodium vanadium fluorophosphate cathode material is 0.8 µm-14 µm, and a D100 particle size of the sodium vanadium fluorophosphate cathode material is less than 65 µm;
a specific surface area of the sodium vanadium fluorophosphate cathode material is 12 m²/g-62 m²/g;
an average pore size of the nitrogen-doped carbon coating layers of the sodium vanadium fluorophosphate cathode material is 1.9 nm-6 nm; and
the powder resistivity of the sodium vanadium fluorophosphate cathode material is 27,500 Ω·cm-62,000 Ω·cm.

4. A preparation method for a sodium vanadium fluorophosphate cathode material, wherein the method comprises:
mixing sodium vanadium fluorophosphate, an organic carbon source, an organic nitrogen source and a crosslinking agent, and performing gel treatment to obtain a gel slurry; and
subjecting the gel slurry to drying treatment and carbonization treatment to obtain a sodium vanadium fluorophosphate cathode material, wherein the drying treatment comprises spray freeze drying.

5. The preparation method for a sodium vanadium fluorophosphate cathode material according to claim 4, wherein the organic carbon source comprises one or more of carboxymethyl cellulose, starch, sucrose, or cyclodextrin;
the organic nitrogen source comprises one or more of chitosan or gelatin;
a mass ratio of the organic carbon source to the organic nitrogen source is (1:1)-(3:1); and
a mass sum of the organic carbon source and the organic nitrogen source is 6%-18% of a mass of the sodium vanadium fluorophosphate.

6. The preparation method for a sodium vanadium fluorophosphate cathode material according to claim 4, wherein the crosslinking agent comprises one or more of citric acid, tannic acid, digallic acid, or phytic acid; and
a mass of the crosslinking agent is 15%-25% of a mass of the sodium vanadium fluorophosphate.

7. The preparation method for a sodium vanadium fluorophosphate cathode material according to any one of claims 4 to 6, wherein a temperature of the gel treatment is 30 °C -50 °C, and a time of the gel treatment is 2-6 h.

8. The preparation method for a sodium vanadium fluorophosphate cathode material according to claim 4, wherein an atomization pressure of the spray freeze drying is 0.1 MPa-0.4 MPa; and
the carbonization treatment comprises stage carbonization treatment, the stage carbonization treatment sequentially comprises first-stage carbonization treatment, second-stage carbonization treatment and third-stage carbonization treatment, a temperature of the first-stage carbonization treatment is 100 °C -120 °C, a holding time of the first-stage carbonization treatment is 2 h-4 h, a temperature of the second-stage carbonization treatment is 300 °C - 350 °C, a holding time of the second-stage carbonization treatment is 1 h-3 h, a temperature of the third-stage carbonization treatment is 600 °C -750 °C, and a holding time of the third-stage carbonization treatment is 5 h-8 h.

9. A cathode plate, comprising a current collector and an active material layer arranged on a surface of the current collector, wherein the active material layer comprises the sodium vanadium fluorophosphate cathode material according to any one of claims 1 to 3 or a sodium vanadium fluorophosphate cathode material prepared by the preparation method for a sodium vanadium fluorophosphate cathode material according to any one of claims 4 to 8.

10. A sodium-ion battery, wherein the sodium-ion battery comprises the cathode plate according to claim 9.
